# EUROPEAN PATENT APPLICATION

(11) **EP 4 725 731 A1**
(43) Date of publication of application: **15.04.2026**
(21) Application number: 24867874.0
(22) Date of filing: 05.07.2024
(51) Int. Cl.: B60K 1/04, B60K 11/04, B60L 50/60

(54) **DUMP TRUCK**

(30) Priority: 20.09.2023 JP 2023151852
(71) Applicant: Hitachi Construction Machinery Co., Ltd., Tokyo 110-0015 (JP)
(72) Inventor: MURAYAMA, Yuji, Tsuchiura-shi, Ibaraki 300-0013 (JP); KANEZAWA, Hiroshi, Tsuchiura-shi, Ibaraki 300-0013 (JP); IKEDA, Jun, Tsuchiura-shi, Ibaraki 300-0013 (JP); NAKATE, Yohei, Tsuchiura-shi, Ibaraki 300-0013 (JP); SAIJO, Kimihiro, Tsuchiura-shi, Ibaraki 300-0013 (JP); KIMURA, Takuya, Tsuchiura-shi, Ibaraki 300-0013 (JP); ABE, Yusuke, Tsuchiura-shi, Ibaraki 300-0013 (JP); LI, Zhi, Tsuchiura-shi, Ibaraki 300-0013 (JP); HONDA, Takeshi, Tsuchiura-shi, Ibaraki 300-0013 (JP); KANAYA, Yosuke, Tsuchiura-shi, Ibaraki 300-0013 (JP); SUZUKI, Shotaro, Tsuchiura-shi, Ibaraki 300-0013 (JP)
(74) Representative: Manitz Finsterwald Patent- und Rechtsanwaltspartnerschaft mbB
(86) International application number: PCT/JP2024/024410
(87) International publication number: WO 2025/062791

(57) **Abstract**

The battery device (26) mounted on the vehicle body frame (5) is composed of a multi-stage battery frame (27) having vertically stacked first support frame body (28), second support frame body (29), third support frame body (30), fourth support frame body (31), and a plurality of battery modules (35) that are detachably attached to each of these first support frame body (28), second support frame body (29), third support frame body (30), fourth support frame body (31).

## Description

### TECHNICAL FIELD

The present disclosure relates to a dump truck suitably used for transporting crushed stone materials excavated in open-pit mines, quarries, and the like.

### BACKGROUND ART

Generally, in open-pit mines and quarries, hydraulic excavators are used to excavate crushed stone materials such as minerals, and the excavated large quantities of crushed stone materials are loaded onto dump trucks and transported to designated unloading sites. The dump truck is configured to include a vehicle body to which front and rear wheels are attached, and a load-carrying platform (vessel) that is pivotally mounted in the vertical direction with the rear side of the vehicle body as a fulcrum.

The dump truck is equipped with a travel electric motor as a power source for rotationally driving the left and right drive wheels. In recent years, dump trucks equipped with batteries instead of generators driven by engines have been proposed, where the travel electric motor is powered by electricity charged in the battery. In dump trucks where the travel electric motor is powered by electricity from the battery, a configuration has been proposed to increase the travel distance of the dump truck by mounting a large number of battery modules on the vehicle body frame (Patent Documents 1, 2).

### PRIOR ART DOCUMENT

### PATENT DOCUMENT

Patent Document 1: EP 3480050 A1
Patent Document 2: CN 111422054 A

### SUMMARY OF THE INVENTION

However, in Patent Document 1, two battery cabinets are mounted on the vehicle body frame in a longitudinal direction, and in Patent Document 2, at least two battery compartments are arranged on both sides in the width direction of the vehicle body frame. As a result, the space occupied by the battery modules increases among the spaces required for mounting equipment on the vehicle body frame. Consequently, there is a problem that the space for mounting equipment other than battery modules on the vehicle body frame is limited.

The present invention has been made in view of the above-mentioned problems of the prior art, and an object of the present invention is to provide a dump truck arranged to compactly mount a large number of battery modules on the vehicle body frame.

The dump truck of the present invention includes a vehicle body frame to which wheels are attached, an electric motor for driving the wheels, and a battery device mounted on the vehicle body frame to supply power to the electric motor. The battery device is configured to include a battery frame having a plurality of support frame bodies stacked in the vertical direction and mounted on the vehicle body frame, and a plurality of battery modules individually mounted on the plurality of support frame bodies. The vehicle body frame has a left frame and a right frame that extend in the longitudinal direction while being spaced apart in the lateral direction. The battery frame is mounted between the left frame and the right frame. The plurality of battery modules are detachably mounted on the plurality of support frame bodies constituting the battery frame. An opening is formed between the plurality of support frame bodies, allowing the plurality of battery modules to be inserted and removed from the battery frame.

According to the present invention, by mounting battery modules on a plurality of support frame bodies stacked in the vertical direction, a large number of battery modules can be compactly mounted on the vehicle body frame. Furthermore, the battery modules can be inserted and removed from the battery frame through the opening formed between the support frame bodies.

### BRIEF DESCRIPTION OF THE DRAWINGS

[FIG. 1] is a left side view showing a dump truck to which an embodiment of the present invention is applied.
[FIG. 2] is a perspective view showing the vehicle body frame alone.
[FIG. 3] is a plan view showing equipment such as a battery mounted on the vehicle body frame.
[FIG. 4] is a front view of a dump truck with the current collector removed, viewed from the front.

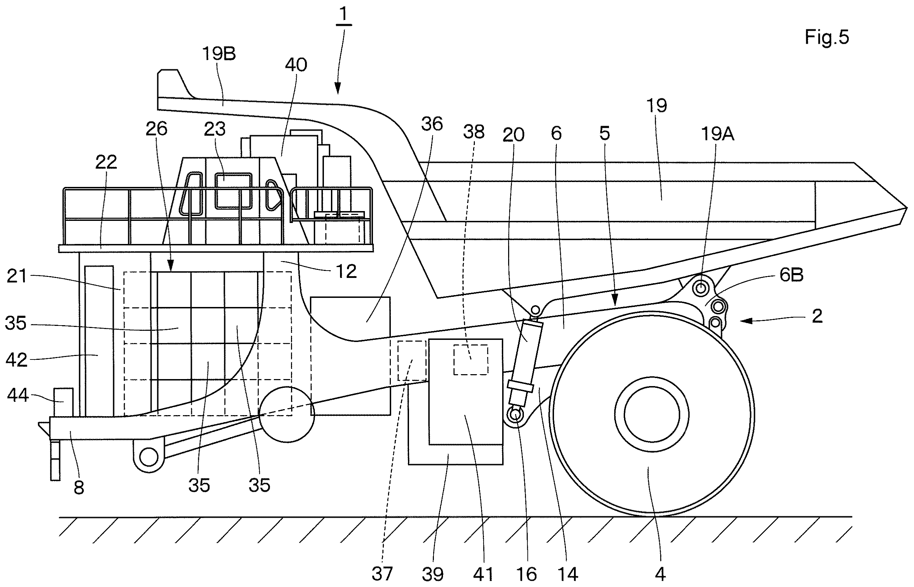

[FIG. 5] is a left side view of a dump truck with the current collector and front wheels removed.
[FIG. 6] is a perspective view showing the battery device.
[FIG. 7] is an exploded perspective view of the battery frame.
[FIG. 8] is an exploded perspective view showing the assembly method of the battery device.
[FIG. 9] is an exploded perspective view showing another assembly method of the battery device.
[FIG. 10] is a perspective view showing the state of inserting and removing the battery module from the battery frame in the lateral direction.
[FIG. 11] is a perspective view showing the state of inserting and removing the battery module from the battery frame in the longitudinal direction.

### MODE FOR CARRYING OUT THE INVENTION

Hereinafter, an embodiment of the present invention will be described in detail with reference to the accompanying drawings, taking a trolley-type dump truck as an example. In the embodiment, the travel direction of the dump truck is described as the longitudinal direction, and the direction perpendicular to the travel direction is described as the lateral direction.

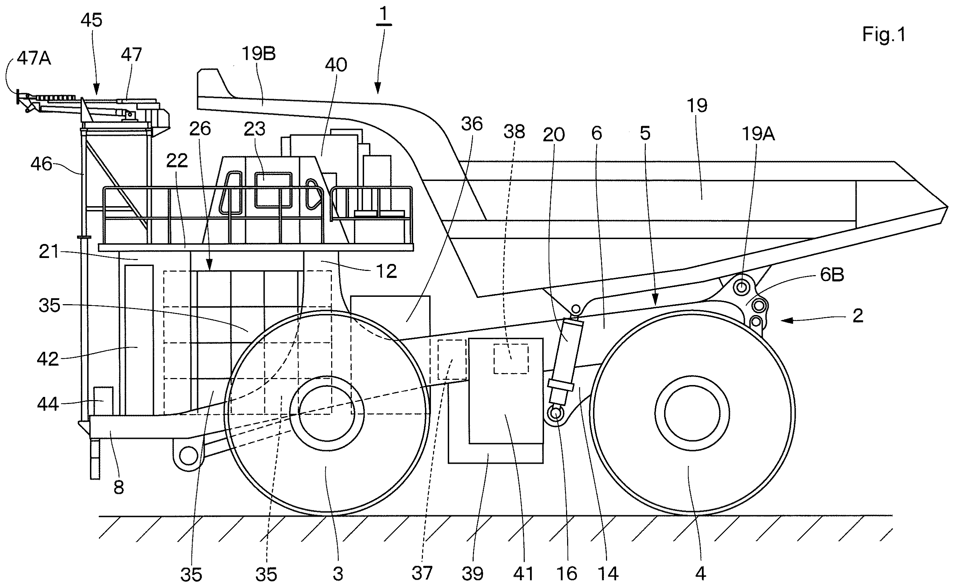

In FIG. 1, the trolley-type dump truck 1 travels by supplying power from a trolley overhead wire installed in a mine or the like to a travel electric motor via a current collector (trolley). The dump truck 1 is configured to include a self-propelled vehicle body 2 equipped with left and right front wheels 3 and left and right rear wheels 4, and a load-carrying platform 19 described later, which is tiltably (vertically movable) mounted on the vehicle body 2. The dump truck 1 loads and transports minerals excavated by a hydraulic excavator or the like (not shown) on the load-carrying platform 19. The vehicle body 2 of the dump truck 1 is configured to include a vehicle body frame 5, a deck 22, a cab 23, and the like, which will be described later.

The left and right front wheels 3 are rotatably attached on the front side of the vehicle body 2, constituting steering wheels. The front wheels 3 are supported by the vehicle body frame 5 via a front wheel suspension, and vibrations transmitted from the front wheels 3 to the vehicle body 2 are mitigated. The left and right rear wheels 4 are rotatably attached on the rear side of the vehicle body 2 and are rotationally driven by a travel device 24 equipped with a travel electric motor 25, which will be described later. The travel device of the rear wheels 4 is mounted on the vehicle body frame 5 via a rear wheel suspension, and vibrations transmitted from the rear wheels 4 to the vehicle body 2 are mitigated.

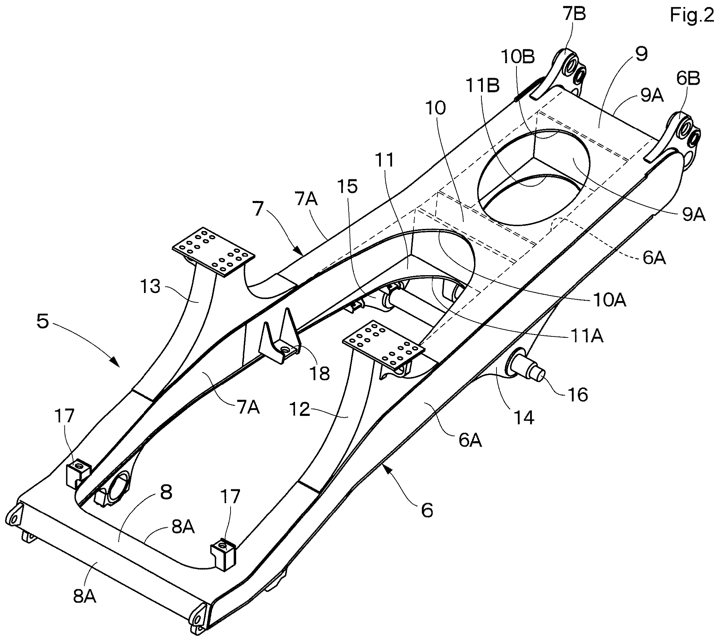

The vehicle body frame 5 serves as the base of the vehicle body 2 and is composed of a strong support structure extending in the longitudinal direction. As shown in FIG. 2, the vehicle body frame 5 is configured to include a left frame 6, a right frame 7, a front frame 8, a rear frame 9, an upper plate 10, a lower plate 11, and the like, which will be described later.

The left frame 6 is arranged on the left side of the vehicle body frame 5. The left frame 6 is configured to include left and right side plates 6A facing each other in the lateral direction, an upper plate 10 closing the upper ends of the left and right side plates 6A, and a lower plate 11 connecting the lower ends of the left and right side plates 6A, and has a box structure with a rectangular cross-section extending in the longitudinal direction. The right frame 7 is arranged on the right side of the vehicle body frame 5. The right frame 7 is configured to include left and right side plates 7A facing each other in the lateral direction, an upper plate 10 closing the upper ends of the left and right side plates 7A, and a lower plate 11 connecting the lower ends of the left and right side plates 7A, and has a box structure with a rectangular cross-section extending in the longitudinal direction.

The left frame 6 and the right frame 7 extend in the longitudinal direction while being spaced apart in the lateral direction, and the lateral spacing between the left frame 6 and the right frame 7 is set larger on the front side compared to the rear side of the vehicle body frame 5. A left rear end bracket 6B is provided (installed) at the rear end of the left frame 6, and a right rear end bracket 7B is provided (installed) at the rear end of the right frame 7, and these left rear end bracket 6B and right rear end bracket 7B face each other in the lateral direction.

The front frame 8 is arranged on the front side of the vehicle body frame 5. The front frame 8 has a box structure extending in the lateral direction, including front and rear side plates 8A facing each other in the longitudinal direction, an upper plate 10, and a lower plate 11, and connects the front end of the left frame 6 and the front end of the right frame 7. The rear frame 9 is arranged on the rear side of the vehicle body frame 5. The rear frame 9 has a box structure extending in the lateral direction, including front and rear side plates 9A facing each other in the longitudinal direction, an upper plate 10, and a lower plate 11, and connects the rear end of the left frame 6 and the rear end of the right frame 7.

The upper plate 10 is installed at the upper ends of the left frame 6, right frame 7, front frame 8, and rear frame 9. The upper plate 10 closes the upper ends of the left frame 6, right frame 7, front frame 8, and rear frame 9, and connects the left frame 6 and the right frame 7. The upper plate 10 is formed with a front opening 10A and a rear opening 10B positioned between the left frame 6 and the right frame 7.

The lower plate 11 is installed at the lower ends of the left frame 6, right frame 7, front frame 8, and rear frame 9, facing the upper plate 10 in the vertical direction. The lower plate 11 closes the lower ends of the left frame 6, right frame 7, front frame 8, and rear frame 9, and connects between the left frame 6 and right frame 7. The lower plate 11 is formed with a front opening 11A and a rear opening 11B at positions corresponding to the front opening 10A and rear opening 10B of the upper plate 10.

The left pillar 12 and right pillar 13 are formed at positions closer to the front from the central part in the longitudinal direction of the vehicle body frame 5, facing each other in the lateral direction. The left pillar 12 and right pillar 13 each have a hollow box structure shaped like a mountain. The left pillar 12 protrudes upward from the upper plate 10 constituting the left frame 6, and the right pillar 13 protrudes upward from the upper plate 10 constituting the right frame 7. The upper ends of the left pillar 12 and right pillar 13 are equipped with a deck 22, etc.

The left cylinder bracket 14 and right cylinder bracket 15 are installed at positions closer to the rear from the middle part in the longitudinal direction of the vehicle body frame 5, facing each other in the lateral direction. The left cylinder bracket 14 protrudes downward from the lower plate 11 constituting the left frame 6, and the right cylinder bracket 15 protrudes downward from the lower plate 11 constituting the right frame 7. A cylinder support shaft 16 extending in the lateral direction is inserted through the lower end side of the left cylinder bracket 14 and right cylinder bracket 15. The lower end side of the hoist cylinder 20, which will be described later, is attached to both ends in the lateral direction of the cylinder support shaft 16.

Near the left front corner where the left frame 6 and front frame 8 intersect, and near the right front corner where the right frame 7 and front frame 8 intersect, left and right front brackets 17 are installed. These left and right front brackets 17 face each other in the lateral direction across the front opening 10A of the upper plate 10, and the left and right front extension plates 28J of the battery frame 27, which will be described later, are attached. Additionally, the left frame 6 and the right frame 7 are installed with left and right rear brackets 18, which are positioned behind the left and right front brackets 17. These left and right rear brackets 18 face each other in the lateral direction across the front opening 10A of the upper plate 10, and the left and right rear extension plates 28N of the battery frame 27 are attached.

The load-carrying platform (vessel) 19 is mounted on the vehicle body frame 5 so that it can tilt (move up and down). The load-carrying platform 19 is formed as a large container with a bottom for loading crushed stone materials such as minerals excavated by hydraulic excavators. The rear bottom of the load-carrying platform 19 is tiltably connected to the left rear end bracket 6B of the left frame 6 and the right rear end bracket 7B of the right frame 7 via a connecting pin 19A. The front side of the load-carrying platform 19 is integrally formed with an eaves section 19B extending horizontally forward from the top. The eaves section 19B of the load-carrying platform 19 extends to the front end side of the deck 22, covering the cab 23 from above.

The hoist cylinder 20 is installed in pairs in the lateral direction between the vehicle body frame 5 and the load-carrying platform 19 (only the left side is shown). The hoist cylinder 20 consists of, for example, a hydraulic cylinder, and tilts the front side of the load-carrying platform 19 up and down relative to the vehicle body frame 5. One end side (lower end side) of the hoist cylinder 20 is attached to the cylinder support shaft 16, and the other end side (upper end side) is attached to the underside of the load-carrying platform 19. Therefore, by extending the hoist cylinder 20, the front side (eaves section 19B side) of the load-carrying platform 19 is lifted upward around the connecting pin 19A, allowing the minerals loaded on the load-carrying platform 19 to be discharged rearward.

The front support member 21 is installed at the front end side of the vehicle body frame 5. The front support member 21 is formed in a frame shape surrounded by left and right side panels and a front panel (grille), etc., and houses a battery device 26, etc., inside. The front support member 21, along with the left pillar 12 and right pillar 13 of the vehicle body frame 5, also serves to support the deck 22, etc., from below.

The deck 22 is positioned in front of the load-carrying platform 19 and is installed on the upper side of the front support member 21. The deck 22 is formed in a long rectangular flat shape in the lateral direction and extends horizontally, supported from below by the left pillar 12, right pillar 13, and front support member 21, etc., of the vehicle body frame 5. The deck 22 is equipped with a cab 23, a control cabinet 40, etc., which will be described later, and the upper surface of the deck 22 serves as a flat passage surface for operators, etc.

The cab 23 is installed on the upper left side of the deck 22, defining the operating room where the operator boards. Inside the cab 23, there are an operator's seat, a steering handle, a start switch, an accelerator pedal, a brake pedal, and control levers (none of which are shown), etc., installed.

On the rear side of the vehicle body frame 5, a rear wheel-side travel device 24 is installed. The travel device 24 is attached to the vehicle body frame 5 via a rear wheel-side suspension device (not shown). The travel device 24 is equipped with left and right travel electric motors 25, and the rotation of these left and right travel electric motors 25 is transmitted to the left and right rear wheels 4 via a reduction mechanism (not shown) .

Next, the battery device 26 mounted on the vehicle body frame 5 will be described.

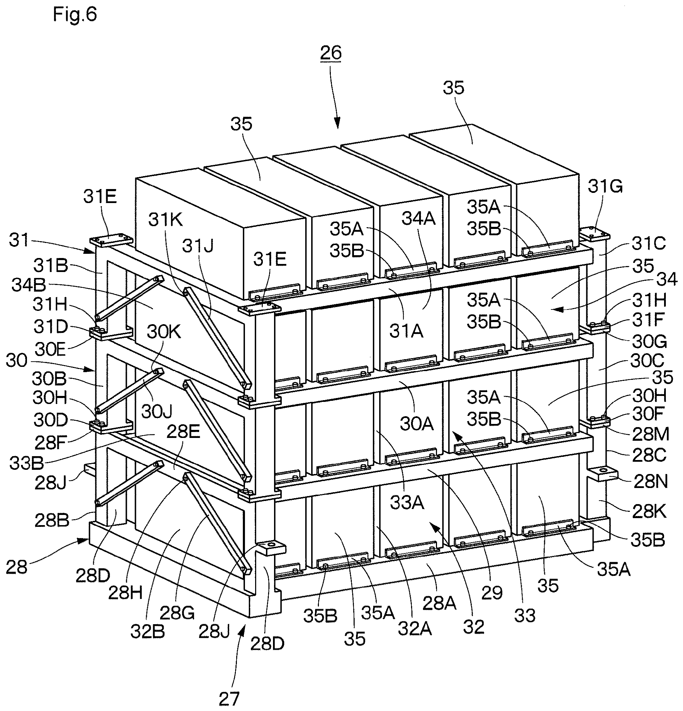

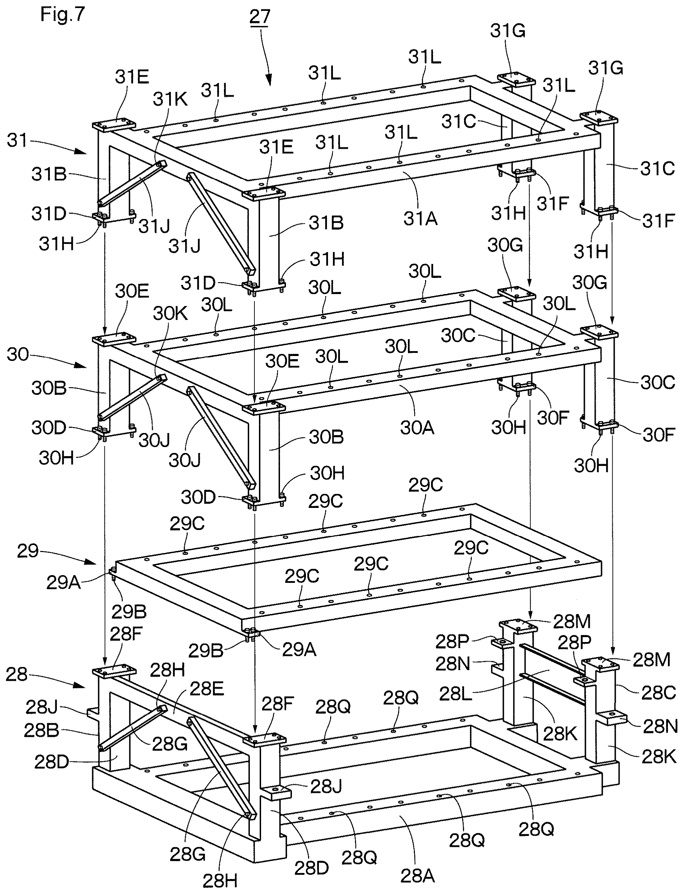

The battery device 26 is located below the deck 22 and mounted on the front side part of the vehicle body frame 5. The battery device 26 stores electric power supplied to electrical equipment mounted on the dump truck 1, such as the travel electric motor 25. As shown in FIGS. 6 and 7, the battery device 26 is configured to include a battery frame 27 and a plurality of battery modules 35. The battery frame 27 has a plurality of support frame bodies stacked in the vertical direction, allowing for multi-stage stacking. The plurality of battery modules 35 are individually attached to the support frame bodies of the battery frame 27.

The battery frame 27 includes a first support frame body 28 arranged at the lowest level, a second support frame body 29 arranged above the first support frame body 28, a third support frame body 30 arranged above the second support frame body 29, and a fourth support frame body 31 arranged at the topmost level above the third support frame body 30. Thus, the battery frame 27 has four layers of support frame bodies (first support frame body 28, second support frame body 29, third support frame body 30, fourth support frame body 31) stacked in the vertical direction.

The first support frame body 28 is configured to include a rectangular frame body 28A extending in the longitudinal direction, a front leg part 28B arranged at the front end of the frame body 28A, and a rear leg part 28C arranged at the rear end of the frame body 28A. The front leg part 28B has left and right front vertical legs 28D with lower ends fixed to the frame body 28A and extending vertically upward, and a front crossbeam 28E connecting the upper ends of the left and right front vertical legs 28D and extending in the lateral direction. Flat plate-shaped mounting flanges 28F are installed at the upper ends of the left and right front vertical legs 28D. Between the left and right front vertical legs 28D and the front crossbeam 28E, which form the front side of the battery frame 27, two reinforcing members 28G extending diagonally downward from the front crossbeam 28E are detachably installed using fasteners 28H such as bolts.

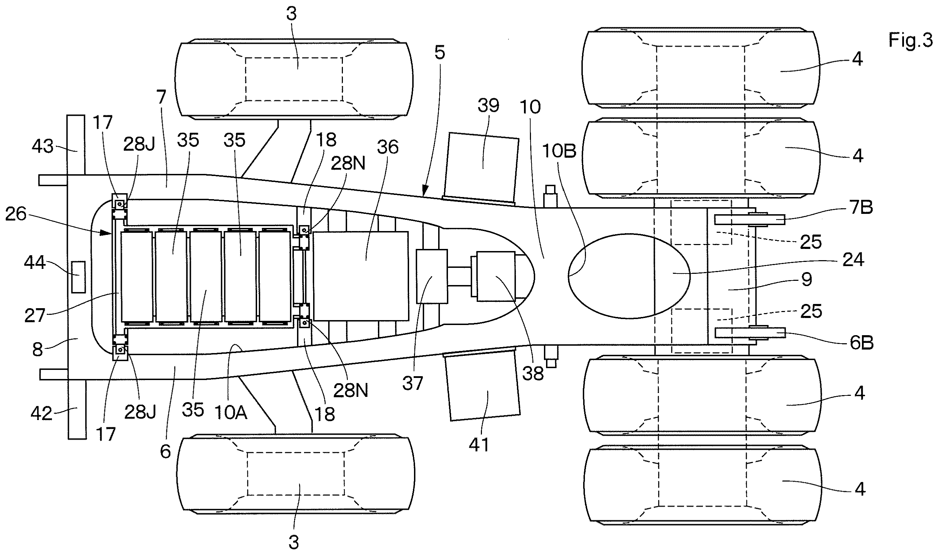

Here, the left front vertical leg 28D constituting the front leg part 28B forms the left end of the battery frame 27, and the right front vertical leg 28D forms the right end of the battery frame 27. At the intermediate part in the vertical direction of the left and right front vertical legs 28D, which are the lateral ends of the battery frame 27, front extension plates 28J extending in the lateral direction are formed. As shown in FIG. 3, these left and right front extension plates 28J are attached to the left and right front brackets 17 installed on the vehicle body frame 5 via vibration-damping mounts (not shown). Thus, the front leg part 28B is attached to the front bracket 17 of the vehicle body frame 5 at a position laterally separated from the lateral ends (left and right front vertical legs 28D) of the battery frame 27 via the left and right front extension plates 28J. Therefore, for example, the lateral spacing of the attachment part between the front leg part 28B of the battery frame 27 and the vehicle body frame 5 can be greatly secured, and the height position can be kept low, allowing stable support of the battery device 26.

On the other hand, the rear leg part 28C includes left and right rear vertical legs 28K, whose lower ends are fixed to the frame body 28A and extend vertically upward, and a rear crossbeam 28L that connects the left and right rear vertical legs 28K and extends in the lateral direction. At the upper ends of the left and right rear vertical legs 28K, flat plate-shaped mounting flanges 28M are attached. Here, the left and right rear vertical legs 28K that constitute the rear leg part 28C form the rear end of the battery frame 27. In the vertical middle section of the left and right rear vertical legs 28K, which are the rear end of the battery frame 27, rear side extension plates 28N that extend laterally from the rear vertical legs 28K are formed. As shown in FIG. 3, these left and right rear side extension plates 28N are mounted to the left and right rear side brackets 18 attached to the vehicle body frame 5 via vibration isolation mounts (not shown). Thus, the rear leg part 28C is mounted to the rear side brackets 18 of the vehicle body frame 5 via the left and right rear side extension plates 28N at the rear end side of the battery frame 27. Therefore, a large distance can be secured between the attachment part of the front leg part 28B of the battery frame 27 and the vehicle body frame 5, and the attachment part of the rear leg part 28C of the battery frame 27 and the vehicle body frame 5, allowing stable support of the battery device 26.

Additionally, at the upper end side of the left and right rear vertical legs 28K, flat plate-shaped support brackets 28P that protrude forward from the rear vertical legs 28K are provided (attached), and the rear end of the second support frame 29 is supported by these left and right support brackets 28P. Furthermore, in the frame body 28A of the first support frame 28, a plurality of bolt holes (female threaded holes) 28Q are formed at intervals in the longitudinal direction for mounting the plurality of battery modules 35.

The second support frame 29 is formed in a rectangular frame shape extending in the longitudinal direction, similar to the frame body 28A of the first support frame 28. At the front end of the second support frame 29, mounting plates 29A that protrude laterally from both ends in the lateral direction are formed. At the rear end of the second support frame 29, a mounting plate (not shown) that protrudes rearward is provided (formed), and this mounting plate is attached to the support bracket 28P attached to the rear leg part 28C of the first support frame 28 using connecting members such as bolts (not shown). Additionally, the mounting plate 29A formed at the front end of the second support frame 29 is attached to the mounting plate (not shown) formed on the front leg part 28B of the first support frame 28 using bolts 29B as connecting members. As a result, the second support frame 29 is mounted on the first support frame 28 while maintaining a certain distance. Similarly to the frame body 28A of the first support frame 28, a plurality of bolt holes 29C for mounting battery modules 35 are formed at intervals in the longitudinal direction in the second support frame 29.

The third support frame 30 is composed of a frame body 30A forming a rectangular frame shape extending in the longitudinal direction, left and right front leg parts 30B arranged at the front end of the frame body 30A, and left and right rear leg parts 30C arranged at the rear end of the frame body 30A. The left and right front leg parts 30B have their upper ends fixed to the frame body 30A and extend vertically downward. At the lower ends of the left and right front leg parts 30B, flat plate-shaped lower mounting flanges 30D are attached, and at the upper ends, flat plate-shaped upper mounting flanges 30E are attached. The left and right rear leg parts 30C have their upper ends fixed to the frame body 30A and extend vertically downward. At the lower ends of the left and right rear leg parts 30C, flat plate-shaped lower mounting flanges 30F are attached, and at the upper ends, flat plate-shaped upper mounting flanges 30G are attached.

The lower mounting flanges 30D provided on the left and right front leg parts 30B of the third support frame 30 are attached to the left and right mounting flanges 28F attached on the front leg part 28B of the first support frame 28 using a plurality of bolts 30H as connecting members. Additionally, the lower mounting flanges 30F attached on the left and right rear leg parts 30C are attached to the left and right mounting flanges 28M attached on the left and right rear vertical legs 28K of the first support frame 28 using the plurality of bolts 30H. As a result, the third support frame 30 is mounted on the second support frame 29 while maintaining a certain distance from the first support frame 28.

Additionally, between the front end of the frame body 30A, which is the front side of the battery frame 27, and the left and right front leg parts 30B, two reinforcement members 30J extending diagonally downward from the frame body 30A are provided (attached) detachably using fasteners such as bolts 30K. Furthermore, similar to the frame body 28A of the first support frame 28, a plurality of bolt holes 30L for mounting battery modules 35 are formed at intervals in the longitudinal direction in the frame body 30A of the third support frame 30.

The fourth support frame 31 is composed of a frame body 31A forming a rectangular frame shape extending in the longitudinal direction, left and right front leg parts 31B arranged at the front end of the frame body 31A, and left and right rear leg parts 31C arranged at the rear end of the frame body 31A. The left and right front leg parts 31B have their upper ends fixed to the frame body 31A and extend vertically downward. At the lower ends of the left and right front leg parts 31B, flat plate-shaped lower mounting flanges 31D are attached, and at the upper ends, flat plate-shaped upper mounting flanges 31E are attached. The left and right rear leg parts 31C have their upper ends fixed to the frame body 31A and extend vertically downward. At the lower ends of the left and right rear leg parts 31C, flat plate-shaped lower mounting flanges 31F are attached, and at the upper ends, flat plate-shaped upper mounting flanges 31G are attached.

The lower mounting flanges 31D attached on the left and right front leg parts 31B of the fourth support frame 31 are attached to the upper mounting flanges 30E attached on the left and right front leg parts 30B of the third support frame 30 using a plurality of bolts 31H as connecting members. Additionally, the lower mounting flanges 31F attached on the left and right rear leg parts 31C are attached to the upper mounting flanges 30G attached on the left and right rear leg parts 30C of the third support frame 30 using the plurality of bolts 31H. As a result, the fourth support frame 31 is mounted on the third support frame 30 while maintaining a certain distance.

Additionally, between the front end of the frame body 31A, which is the front side of the battery frame 27, and the left and right front leg parts 31B, two reinforcement members 31J extending diagonally downward from the frame body 31A are attached detachably using fasteners 31K such as bolts. Furthermore, similar to the frame body 28A of the first support frame 28, a plurality of bolt holes 31L for mounting battery modules 35 are formed at intervals in the longitudinal direction in the frame body 31A of the fourth support frame 31.

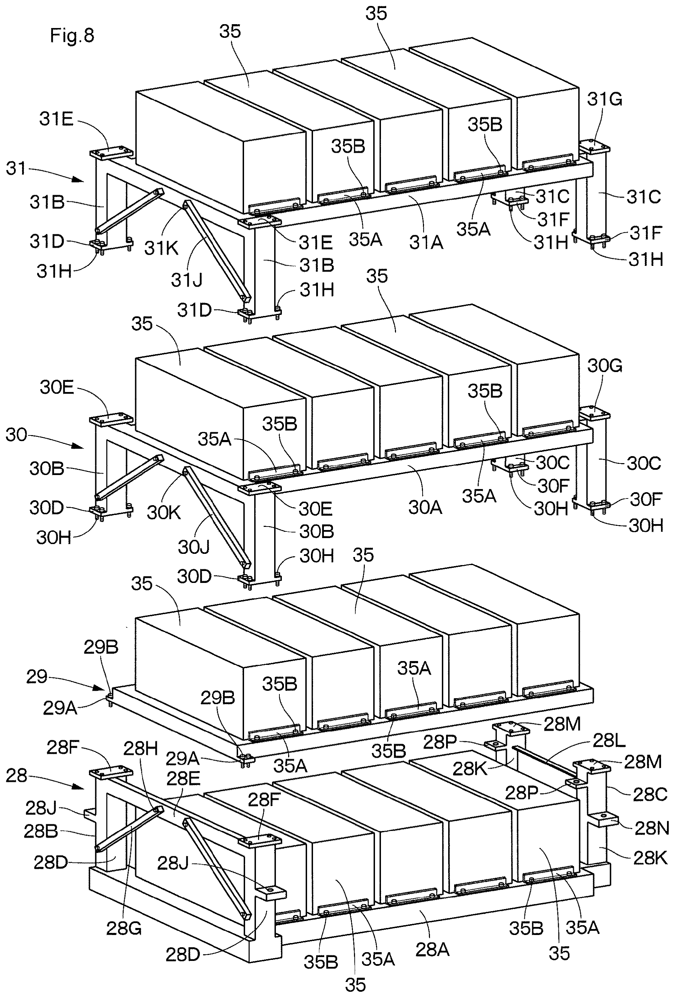

Thus, the battery frame 27 includes the first support frame 28, the second support frame 29, the third support frame 30, and the fourth support frame 31, which are stacked in the vertical direction. The second support frame 29 is separably stacked on the first support frame 28 using bolts 29B, and the third support frame 30 is separably stacked on the second support frame 29 using bolts 30H. Additionally, the fourth support frame 31 is separably stacked on the third support frame 30 using bolts 31H. Therefore, as shown in FIG. 8, battery modules 35 can be mounted on the first support frame 28, the second support frame 29, the third support frame 30, and the fourth support frame 31. In this state, by sequentially stacking the first support frame 28, the second support frame 29, the third support frame 30, and the fourth support frame 31, the entire battery device 26 can be efficiently assembled.

A first opening 32 is formed between the first support frame 28 and the second support frame 29. The first opening 32 includes a lateral opening 32A for inserting and removing the battery module 35 in the lateral direction, and a longitudinal opening 32B for inserting and removing the battery module 35 in the longitudinal direction. The front side of the longitudinal opening 32B is closed by a reinforcement member 28G attached to the first support frame 28. A second opening 33 is formed between the second support frame 29 and the third support frame 30. The second opening 33 includes a lateral opening 33A for inserting and removing the battery module 35 in the lateral direction, and a longitudinal opening 33B for inserting and removing the battery module 35 in the longitudinal direction. The front side of the longitudinal opening 33B is closed by a reinforcement member 30J attached to the third support frame 30. A third opening 34 is formed between the third support frame 30 and the fourth support frame 31. The third opening 34 includes a lateral opening 34A for inserting and removing the battery module 35 in the lateral direction, and a longitudinal opening 34B for inserting and removing the battery module 35 in the longitudinal direction. The front side of the longitudinal opening 34B is closed by a reinforcement member 31J attached to the fourth support frame 31.

The plurality of battery modules 35 are detachably attached to the battery frame 27. The battery modules 35 are detachably attached, for example, to the first support frame 28, the second support frame 29, the third support frame 30, and the fourth support frame 31, with five modules each. The battery module 35 consists of rechargeable batteries such as lithium-ion batteries and is formed in a block shape extending in the lateral direction. These plurality of battery modules 35 supply power to electrical equipment such as the travel electric motor 25.

Brackets 35A are fixed to the lower ends of both lateral sides of the battery module 35, and bolts 35B are inserted through the brackets 35A. By screwing this bolt 35B into the bolt hole 28Q of the first support frame 28, for example, five battery modules 35 can be detachably attached to the first support frame 28. Similarly, five battery modules 35 can be detachably attached to the second support frame 29, the third support frame 30, and the fourth support frame 31 using bolts 35B.

As a method of assembling the battery device 26, for example, as shown in FIG. 8, five battery modules 35 are attached to the first support frame 28, the second support frame 29, the third support frame 30, and the fourth support frame 31, which constitute the battery frame 27. Then, the front extension plate 28J and the rear extension plate 28N of the first support frame 28 are attached to the front bracket 17 and the rear bracket 18 of the vehicle body frame 5, respectively, via anti-vibration mounts (not shown) . In this state, the second support frame 29 is attached on the first support frame 28, the third support frame 30 is attached on the second support frame 29, and the second support frame 29 is attached on the third support frame 30, thereby assembling the battery device 26.

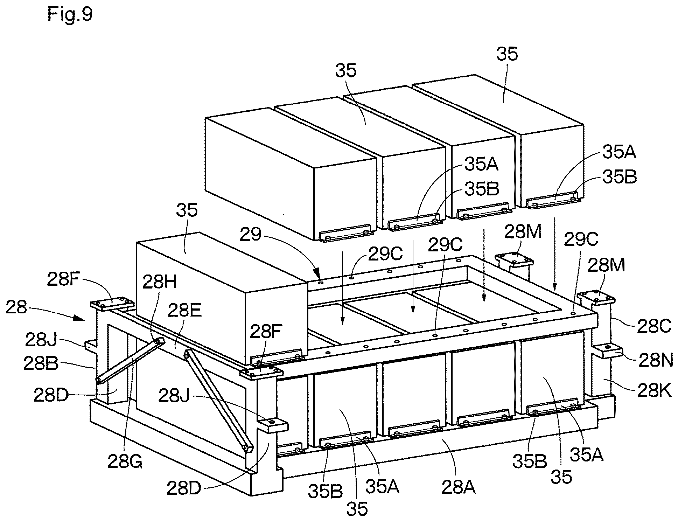

As another method of assembling the battery device 26, first, the front extension plate 28J and the rear extension plate 28N of the first support frame 28 are attached to the front bracket 17 and the rear bracket 18 of the vehicle body frame 5, respectively, via anti-vibration mounts (not shown) . In this state, for example, as shown in FIG. 9, after attaching five battery modules 35 to the first support frame 28, the second support frame 29 is attached on the first support frame 28, and five battery modules 35 are attached to the second support frame 29. After attaching five battery modules 35 to the second support frame 29, the third support frame 30 is attached on the second support frame 29. Then, after attaching five battery modules 35 to the third support frame 30, the fourth support frame 31 is attached on the third support frame 30, and five battery modules 35 are attached to the fourth support frame 31, thereby assembling the battery device 26.

In this way, a high-capacity battery device 26 is assembled with five battery modules 35 attached to each of the first support frame 28, the second support frame 29, the third support frame 30, and the fourth support frame 31, which constitute the battery frame 27. This battery device 26 is mounted on the front side of the vehicle body frame 5 while being positioned between the left frame 6 and the right frame 7, which constitute the vehicle body frame 5 (see FIG. 3). This allows a total of 20 and many battery modules 35 to be compactly mounted on the vehicle body frame 5 in a consolidated state within a single battery frame 27. Moreover, the battery frame 27 is positioned between the left frame 6 and the right frame 7 of the vehicle body frame 5, allowing the heavy battery device 26 to be mounted at the central part in the lateral direction of the vehicle body frame 5 while keeping the mounting position low in the height direction. As a result, the stability of the dump truck 1 during travel can be enhanced.

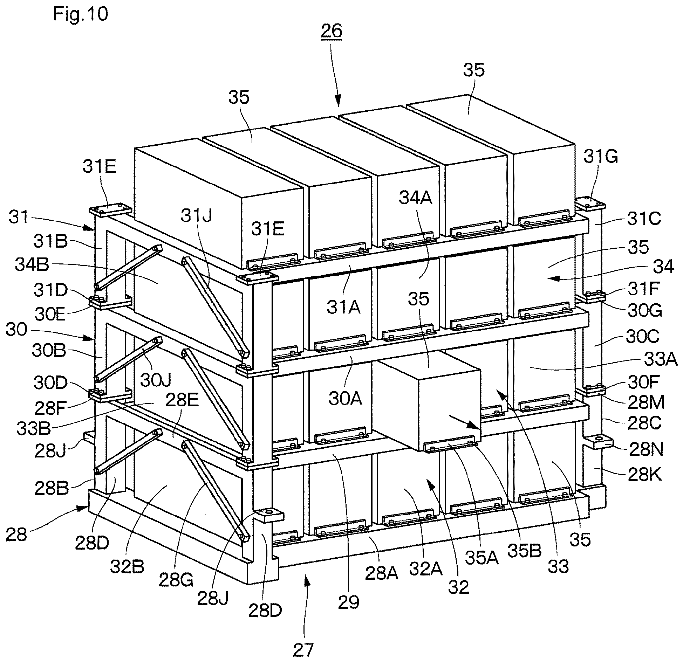

Here, a first opening 32 is formed between the first support frame 28 and the second support frame 29, a second opening 33 is formed between the second support frame 29 and the third support frame 30, and a third opening 34 is formed between the third support frame 30 and the fourth support frame 31, which constitute the battery frame 27. These first opening 32, second opening 33, and third opening 34 each have lateral openings 32A, 33A, 34A, and longitudinal openings 32B, 33B, 34B. Therefore, for example, as shown in FIG. 10, by removing the bolt 35B of the battery module 35 attached to the second support frame 29, a single battery module 35 can be inserted and removed laterally through the lateral opening 33A of the second opening 33 with respect to the battery frame 27. Similarly, the battery module 35 attached to the third support frame 30 can be inserted and removed laterally through the third opening 34 (lateral opening 34A), and the battery module 35 attached to the fourth support frame 31 can be inserted and removed laterally on its own. Therefore, even if one of the plurality of battery modules 35 fails, the failed battery module 35 can be individually removed from the battery frame 27 and replaced with a new battery module 35.

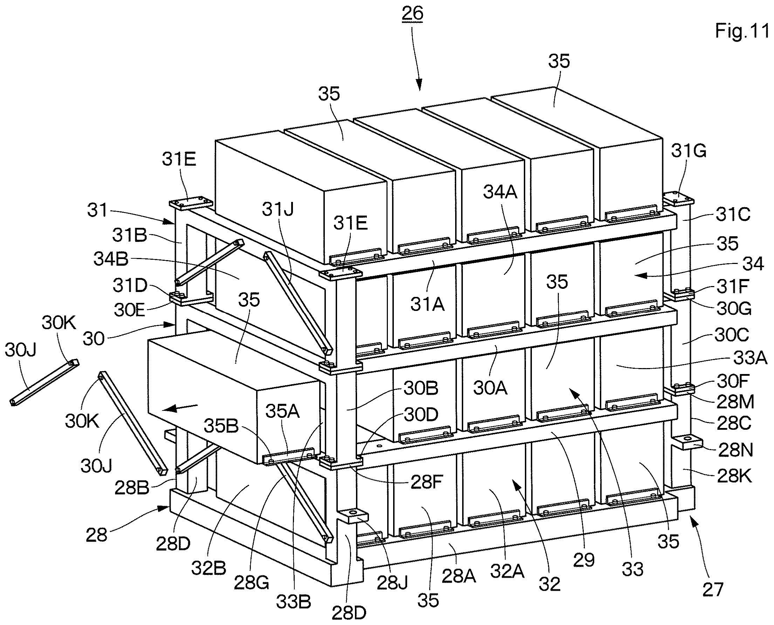

On the other hand, for example, as shown in FIG. 11, by removing the reinforcement member 30J attached between the frame body 30A of the third support frame 30 and the left and right front leg part s 30B, the longitudinal opening 33B of the second opening 33 is opened. This allows the battery module 35 attached to the second support frame 29 to be inserted and removed longitudinally through the longitudinal opening 33B with respect to the battery frame 27 on its own. Here, the battery frame 27 is positioned between the left frame 6 and the right frame 7 of the vehicle body frame 5. Therefore, the battery module 35 facing the left pillar 12 of the left frame 6 and the right pillar 13 of the right frame 7 in the lateral direction becomes difficult to insert and remove laterally with respect to the battery frame 27. In this case, with the reinforcement member 30J removed, the plurality of battery modules 35 attached to the second support frame 29 are sequentially removed forward. This allows, for example, the removal of a failed battery module 35 and the installation of a replacement battery module 35.

The reactor 36 is positioned under the deck 22 and mounted on the vehicle body frame 5. The reactor 36 is electrically connected between the battery device 26 and a converter 39 described later, and includes an LC filter for removing high-frequency noise and a circuit breaker for protecting the battery device 26. The reactor 36 is adjacent to the rear side of the battery device 26 and is positioned between the left frame 6 and the right frame 7, mounted on the vehicle body frame 5.

The hydraulic pump drive motor 37 is located behind the reactor 36 and is mounted on the vehicle body frame 5. The hydraulic pump 38 is located behind the hydraulic pump drive motor 37 and is mounted on the vehicle body frame 5. The hydraulic pump drive motor 37 consists of an electric motor and drives the hydraulic pump 38 using power from the battery device 26. Thus, hydraulic fluid from the hydraulic pump 38 is supplied to hydraulic equipment such as the hoist cylinder 20.

The converter 39 is located between the right front wheel 3 and the rear wheel 4 and is mounted on the vehicle body frame 5. The converter 39 consists of a DC/DC converter and converts the voltage of the DC power supplied from the battery device 26 to the travel electric motor 25. The control cabinet 40 is mounted alongside the right side of the cab 23 on the upper side of the deck 22. The control cabinet 40 is configured to include an inverter and other components to control the travel electric motor 25.

The hydraulic fluid tank 41 is mounted on the left frame 6, which is opposite to the right frame 7 where the converter 39 is installed, among the left frame 6 and right frame 7 that constitute the vehicle body frame 5. The hydraulic fluid tank 41 is located between the left front wheel 3 and the rear wheel 4, mounted on the left frame 6, and stores hydraulic fluid supplied to hydraulic equipment such as the hoist cylinder 20 mounted on the vehicle body frame 5.

The left radiator 42 and right radiator 43 are located under the deck 22 and mounted on the front end side of the vehicle body frame 5. The left radiator 42 and right radiator 43 are connected to a refrigerant passage (not shown) installed in the battery device 26 and perform heat exchange with the refrigerant circulating through the refrigerant passage by the refrigerant pump 44.

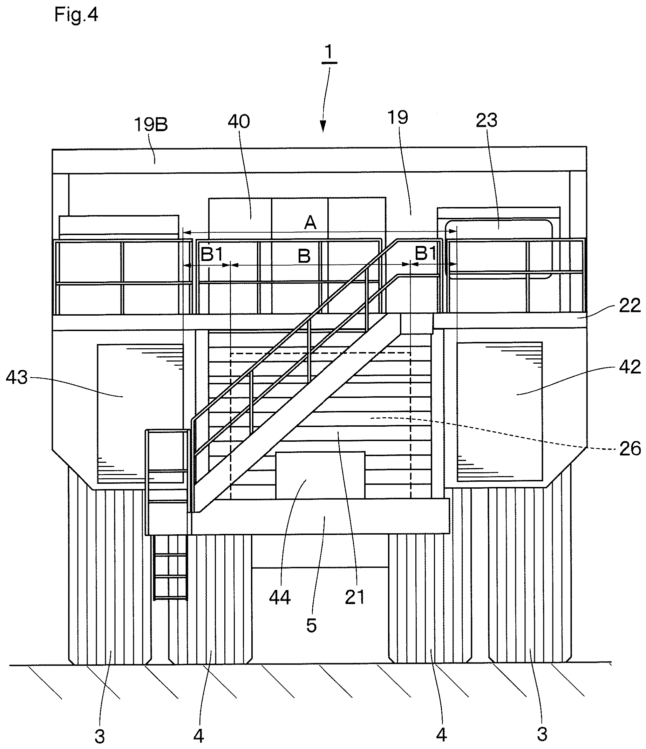

Here, as shown in FIG. 4, the lateral spacing A between the left radiator 42 and the right radiator 43 is set larger than the lateral length dimension B of the battery device 26. Specifically, a lateral spacing of dimension B1 is formed between the right end of the left radiator 42 and the left end of the battery device 26, and between the left end of the right radiator 43 and the right end of the battery device 26. Therefore, the battery module 35 constituting the battery device 26 can be inserted and removed in the longitudinal direction with respect to the battery frame 27 without being obstructed by the left radiator 42 and right radiator 43.

The current collector 45 is attached on the pantograph support 46 mounted at the front end of the vehicle body frame 5 (see FIG. 1). The current collector 45 collects power from trolley overhead wires (not shown) installed along the travel path of the dump truck 1 in mines and supplies it to the travel electric motor 25, battery device 26, and others. The current collector 45 includes a pantograph 47 that is extendably attached between the pantograph support 46 and the trolley overhead wire, and a collector head 47A that slides against the trolley overhead wire when the pantograph 47 extends.

The dump truck 1 according to this embodiment has the above-described configuration, and the operation of transporting minerals excavated in mines using the dump truck 1 will be described below.

The dump truck 1 loads minerals excavated by a hydraulic excavator onto the load-carrying platform 19 in the loading area and transports them to a dumping area located away from the loading area for unloading. Generally, the loading area and the dumping area are flat roads, and the dumping area is set at a higher position than the loading area. Therefore, the travel path from the loading area to the dumping area becomes an uphill road. For example, when the dump truck 1 travels on an uphill road, the travel electric motor 25 is driven by power from the trolley overhead wire. Additionally, when the dump truck 1 travels on a flat road or other travel path without trolley overhead wires, the travel electric motor 25 is driven by power from the battery device 26.

First, the dump truck 1 loads minerals excavated by a hydraulic excavator (not shown) onto the load-carrying platform 19 in the loading area. The loading area is usually on a flat road that does not require large power. Therefore, the travel electric motor 25 is driven by power from the battery device 26, and the dump truck 1 travels on the flat road within the loading area.

When the dump truck 1 travels on an uphill road from the loading area to the dumping area, the pantograph 47 of the current collector 45 mounted at the front end of the vehicle body frame 5 is extended, and the collector head 47A of the pantograph 47 slides against the trolley overhead wire installed on the uphill road. Thus, the travel electric motor 25 is driven by power from the trolley overhead wire, and the dump truck 1 travels on the uphill road toward the dumping area.

When the dump truck 1 traveling on the uphill road reaches the dumping area, since the dumping area is a flat road, the dump truck 1 travels within the dumping area using power from the battery device 26. The dump truck 1 that has reached the dumping area drives the hydraulic pump 38 with the hydraulic pump drive motor 37, and extends the hoist cylinder 20 with the pressure oil discharged from the hydraulic pump 38. Thus, the load-carrying platform 19 tilts around the connecting pin 19A, allowing the minerals loaded on the load-carrying platform 19 to be discharged into the dumping area.

After discharging the minerals loaded on the load-carrying platform 19 into the dumping area, the dump truck 1 travels toward the loading area to load new minerals. Since the dumping area is at a higher position than the loading area, the travel path from the dumping area to the loading area becomes a downhill road. Since large power is not required on the downhill road, the travel electric motor 25 is driven by power from the battery device 26, and the dump truck 1 travels on the downhill road toward the loading area.

In this way, the dump truck 1 travels between the loading area and the dumping area while appropriately selecting power from the trolley overhead wire and the battery device 26 according to the road surface. The dump truck 1 repeatedly transports minerals loaded on the load-carrying platform 19 in the loading area to the dumping area and discharges them into the dumping area.

The battery device 26 according to this embodiment is configured with five battery modules 35 mounted on each of the first support frame 28, second support frame 29, third support frame 30, and fourth support frame 31 that constitute the battery frame 27. Thus, a large number of battery modules 35 can be mounted in an aggregated state on one battery frame 27 at the front side of the vehicle body frame 5 (between the left frame 6 and right frame 7). Therefore, the space occupied by the battery modules 35 on the vehicle body frame 5 can be reduced, and a larger space can be secured for mounting equipment other than the battery modules 35 (such as the reactor 36, hydraulic pump drive motor 37, hydraulic pump 38) on the vehicle body frame 5.

In this case, the front leg 28B of the first support frame 28 is mounted on the front bracket 17 of the vehicle body frame 5 via the left and right front extension plates 28J at a position laterally separated from the lateral ends (left and right front vertical legs 28D) of the battery frame 27. Therefore, a large lateral spacing can be secured between the mounting part of the front leg 28B of the battery frame 27 and the vehicle body frame 5. Additionally, the rear leg 28C of the first support frame 28 is mounted on the rear bracket 18 of the vehicle body frame 5 via the left and right rear extension plates 28N at the rear end side of the battery frame 27. Therefore, a large spacing can be secured between the attachment part of the front leg 28B of the battery frame 27 and the vehicle body frame 5, and between the attachment part of the rear leg 28C of the battery frame 27 and the vehicle body frame 5. As a result, even if the vehicle body frame 5 experiences lateral vibration (rolling) or longitudinal vibration (pitching) during the travel of the dump truck 1, the rigidity of the battery frame 27 against these vibrations can be enhanced, allowing stable support of the battery device 26.

Furthermore, a first opening 32 is formed between the first support frame 28 and the second support frame 29 that constitute the battery frame 27, a second opening 33 is formed between the second support frame 29 and the third support frame 30, and a third opening 34 is formed between the third support frame 30 and the fourth support frame 31. These first opening 32, second opening 33, and third opening 34 each have a lateral opening 32A, 33A, 34A and a longitudinal opening 32B, 33B, 34B. Therefore, as shown in FIG. 10, by removing the bolt 35B of the battery module 35 attached to the second support frame 29, a single battery module 35 can be inserted and removed laterally through the lateral opening 33A of the second opening 33 with respect to the battery frame 27. Similarly, the battery module 35 attached to the third support frame 30 can be inserted and removed laterally through the lateral opening 34A of the third opening 34, and the battery module 35 attached to the fourth support frame 31 can be inserted and removed laterally independently.

On the other hand, as shown in FIG. 11, by removing the reinforcement member 30J attached between the frame body 30A of the third support frame 30 and the left and right front leg parts 30B, the battery module 35 attached to the second support frame 29 can be inserted and removed longitudinally through the longitudinal opening 33B of the second opening 33 with respect to the battery frame 27. Similarly, by removing the reinforcement member 28G from the first support frame 28, the battery module 35 attached to the first support frame 28 can be inserted and removed longitudinally through the first opening 32 (longitudinal opening 32B). Additionally, by removing the reinforcement member 31J from the fourth support frame 31, the battery module 35 attached to the fourth support frame 31 can be inserted and removed longitudinally through the third opening 34 (longitudinal opening 34B) .

In this way, the plurality of battery modules 35 can be inserted and removed independently through the first opening 32, second opening 33, third opening 34, etc., formed in the battery frame 27. Therefore, even if one of the plurality of battery modules 35 constituting the battery device 26 fails, the faulty battery module 35 can be individually removed from the battery frame 27 and replaced with a new battery module 35 without disassembling the battery frame 27.

In this case, at the front end side of the vehicle body frame 5, a left radiator 42 and a right radiator 43 are mounted, which are connected to a refrigerant passage (not shown) installed in the battery device 26, etc., and perform heat exchange with the refrigerant circulating through the refrigerant passage. However, the lateral distance A between the left radiator 42 and the right radiator 43 is set larger than the lateral length dimension B of the battery device 26 (see FIG. 4). As a result, the battery module 35 constituting the battery device 26 can be inserted and removed longitudinally with respect to the battery frame 27 without being obstructed by the left radiator 42 and the right radiator 43.

Thus, the dump truck 1 according to the embodiment includes a vehicle body frame 5 to which the front wheels 3 and rear wheels 4 are attached, a travel electric motor 25 that drives the rear wheels 4, and a battery device 26 mounted on the vehicle body frame 5 to supply electric power to the travel electric motor 25. The battery device 26 is configured to include a battery frame 27 attached to the vehicle body frame 5, having a plurality of support frames (first support frame 28, second support frame 29, third support frame 30, fourth support frame 31) stacked in the vertical direction, and the plurality of battery modules 35 individually attached to the respective support frames. The vehicle body frame 5 has a left frame 6 and a right frame 7 that extend longitudinally while being spaced apart in the lateral direction. The battery frame 27 is mounted between the left frame 6 and the right frame 7, and the plurality of battery modules 35 are detachably attached to the plurality of support frames constituting the battery frame 27. Openings (first opening 32, second opening 33, third opening 34) are formed between the plurality of support frames, allowing the plurality of battery modules 35 to be inserted and removed with respect to the battery frame 27.

According to this configuration, the plurality of battery modules 35 can be mounted on the vehicle body frame 5 in a state where they are consolidated into one battery frame 27. Therefore, the space occupied by the battery modules 35 in the vehicle body frame 5 can be reduced, and more space can be secured for mounting equipment other than the battery modules 35 on the vehicle body frame 5. Moreover, the plurality of battery modules 35 can be inserted and removed with respect to the battery frame 27 through the first opening 32, second opening 33, third opening 34, etc. Therefore, even if one of the plurality of battery modules 35 fails, the faulty battery module 35 can be individually removed from the battery frame 27 and replaced with a new battery module 35 without disassembling the battery frame 27. Furthermore, since the heavy battery device 26 can be mounted at the central part in the lateral direction of the vehicle body frame 5, the stability of the dump truck 1 during travel can be enhanced.

In the embodiment, the first opening 32, second opening 33, and third opening 34 have lateral openings 32A, 33A, 34A for inserting and removing the battery module 35 laterally, and longitudinal openings 32B, 33B, 34B for inserting and removing the battery module 35 longitudinally. According to this configuration, depending on the mounting position of the battery module 35 with respect to the battery frame 27, the battery module 35 can be inserted and removed from the lateral openings 32A, 33A, 34A or the longitudinal openings 32B, 33B, 34B of the first opening 32, second opening 33, and third opening 34.

In the embodiment, the battery frame 27 is composed of a plurality of support frame bodies (first support frame body 28, second support frame body 29, third support frame body 30, fourth support frame body 31), which are equipped with front leg parts 28B, 30B, 31B and rear leg parts 28C, 30C, 31C that extend vertically to set the spacing between the plurality of support frame bodies. The front leg part 28B is attached to the vehicle body frame 5 at a position laterally spaced from the end of the battery frame 27, and the rear leg part 28C is attached to the vehicle body frame 5 at the rear end side of the battery frame 27. According to this configuration, it is possible to ensure a large lateral spacing between the attachment part of the front leg part 28B of the battery frame 27 and the vehicle body frame 5, and also ensure a large spacing between the attachment part of the front leg part 28B of the battery frame 27 and the vehicle body frame 5, and the attachment part of the rear leg part 28C of the battery frame 27 and the vehicle body frame 5. As a result, even if the vehicle body frame 5 of the dump truck 1 experiences vibrations in the lateral direction or longitudinal direction during travel, the rigidity of the battery frame 27 against these vibrations is enhanced, allowing the battery device 26 to be stably supported.

In the embodiment, the plurality of support frame bodies (first support frame body 28, second support frame body 29, third support frame body 30, fourth support frame body 31) that constitute the battery frame 27 are stacked in a separable manner using bolts 29B, 30H, 31H. According to this configuration, for example, by stacking the first support frame body 28, second support frame body 29, third support frame body 30, and fourth support frame body 31, each with a battery module 35 attached, the entire battery device 26 can be assembled efficiently.

In the embodiment, on the front side of the battery frame 27, reinforcement members (28G, 30J, 31J) are detachably attached using fasteners (28H, 30K, 31K) to reinforce the plurality of support frame bodies (first support frame body 28, third support frame body 30, fourth support frame body 31). According to this configuration, by reinforcing the first support frame body 28, third support frame body 30, and fourth support frame body 31 with reinforcement members 28G, 30J, 31J, the overall strength of the battery frame 27 can be enhanced.

In the embodiment, on the front end side of the vehicle body frame 5, a left radiator 42 and a right radiator 43, which perform heat exchange with the refrigerant supplied to the battery device 26, are attached with lateral spacing, and the lateral spacing between the left radiator 42 and the right radiator 43 is set larger than the lateral length dimension of the battery frame 27. According to this configuration, the battery module 35 can be inserted and removed in the longitudinal direction relative to the battery frame 27 through the first opening 32, second opening 33, third opening 34, etc., without being obstructed by the left radiator 42 and right radiator 43.

In the embodiment, an example is illustrated where a battery device 26 with a battery frame 27 is mounted on a trolley-type dump truck 1 equipped with a current collector 45. However, the present invention is not limited to this and can be applied to dump trucks not equipped with a current collector 45.

Additionally, in the embodiment, a battery frame 27 with a support frame body stacked in four layers, including the first support frame body 28, second support frame body 29, third support frame body 30, and fourth support frame body 31, is illustrated. However, the present invention is not limited to this and may use a configuration with a battery frame having a support frame body stacked in two, three, or more than five layers.

### DESCRIPTION OF REFERENCE NUMERALS

1: Dump truck
2: Vehicle body
3: Front wheel
4: Rear wheel
5: Vehicle body frame
6: Left frame
7: Right frame
25: Travel electric motor
26: Battery device
27: Battery frame
28: First support frame
29: Second support frame
30: Third support frame
31: Fourth support frame
28B,30B,31B: Front leg part
28C,30C,31C: Rear leg part
28G,30J,31J: Reinforcement member
28H,30K,31K: Fastener
29B,30H,31H: Bolt (connecting member)
32: First opening
33: Second opening
34: Third opening
32A,33A,34A: Lateral opening
32B,33B,34B: Longitudinal opening
42: Left radiator
43: Right radiator

## Claims

1. A dump truck comprising:
a vehicle body frame to which wheels are attached;
an electric motor that drives the wheels, and
a battery device mounted on the vehicle body frame to supply power to the electric motor, wherein
the battery device is configured to include: a battery frame attached to the vehicle body frame having a plurality of support frames stacked vertically with each other; and a plurality of battery modules individually attached to respective of the support frames,
the vehicle body frame has a left frame and a right frame each extending along a longitudinally direction and being opposed with each other in a laterally direction,
the battery frame is mounted between the left frame and the right frame,
the plurality of battery modules are detachably mounted to the plurality of support frames configuring the battery frame, and
openings are formed between the plurality of support frames to allow the plurality of battery modules to be inserted and removed from the battery frame.

2. The dump truck according to claim 1,
the openings include lateral openings for inserting and removing the battery modules in the laterally direction and longitudinal openings for inserting and removing the battery modules in the longitudinally direction.

3. The dump truck according to claim 1,
the plurality of support frames configuring the battery frame are provided with a front leg part and a rear leg part each extending along a vertically direction to set the spacing between the support frames,
each of the front leg part is mounted to the vehicle body frame at a position in the laterally direction apart from the lateral end of the battery frame, and
each of the rear leg part is mounted to the vehicle body frame at the rear end side of the battery frame.

4. The dump truck according to claim 1,
the plurality of support frames configuring the battery frame are stacked separably with each other by using connecting members.

5. The dump truck according to claim 1,
on the front side of the battery frame, reinforcement members that reinforce the plurality of support frames are detachably mounted by using fasteners.

6. The dump truck according to claim 1,
on the front end side of the vehicle body frame, a left radiator and a right radiator for heat exchange with the coolant supplied to the battery device are installed with lateral spacing, and
the lateral spacing between the left radiator and the right radiator is set larger than the lateral length dimension of the battery frame.
